(19) **Europäisches Patentamt**
**European Patent Office**
**Office européen des brevets**

(11) **EP 1 646 965 B1**

(12) **FASCICULE DE BREVET EUROPEEN**

(45) Date de publication et mention
de la délivrance du brevet:
**23.04.2008 Bulletin 2008/17**

(51) Int Cl.:
***G06K 9/00*** *(2006.01)*

(21) Numéro de dépôt: **04766249.9**

(22) Date de dépôt: **16.07.2004**

(86) Numéro de dépôt international:
**PCT/EP2004/051527**

(87) Numéro de publication internationale:
**WO 2005/015481 (17.02.2005 Gazette 2005/07)**

(54) **PROCEDE D'ACQUISITION D'IMAGE D'EMPREINTE DIGITALE**

VERFAHREN ZUR AKQUISITION EINES BILDES EINES FINGERABDRUCKS

METHOD FOR THE ACQUISITION OF AN IMAGE OF A FINGER PRINT

(84) Etats contractants désignés:
**DE FI FR GB IT NL**

(30) Priorité: **18.07.2003 FR 0308822**

(43) Date de publication de la demande:
**19.04.2006 Bulletin 2006/16**

(73) Titulaire: **Atmel Switzerland**
**1705 Fribourg (CH)**

(72) Inventeur: **MAINGUET, Jean-François**
**Thales Int. Property**
**F-94117 ARCUEIL (FR)**

(74) Mandataire: **Guérin, Michel et al**
**Marks & Clerk France**
**31-33, Avenue Aristide Briand**
**F-94117 Arcueil Cedex (FR)**

(56) Documents cités:
**EP-A- 0 735 502      EP-A- 0 813 164**
**EP-A- 1 179 801      US-A1- 2003 123 714**

## Description

L'invention concerne la reconnaissance d'empreintes digitales, et plus particulièrement la reconnaissance à partir d'une barrette allongée de capteurs capables de détecter les crêtes et vallées des empreintes digitales lors du défilement relatif d'un doigt par rapport au capteur sensiblement perpendiculairement à la direction d'allongement de la barrette.

On a déjà décrit de tels capteurs de forme allongée, plus petits que l'image du doigt à recueillir et qui ne peuvent donc recueillir cette image que grâce au défilement relatif. Ces capteurs peuvent fonctionner principalement par détection optique ou capacitive ou thermique ou piézoélectrique.

Ces capteurs ont l'avantage, par rapport aux capteurs sans défilement sur lesquels on laisse le doigt immobile, d'avoir un coût réduit du fait de la faible surface de silicium qu'ils utilisent. Mais ils nécessitent une reconstruction de l'image globale du doigt puisque cette image n'est acquise que ligne par ligne ou par quelques lignes à la fois.

Si l'image est ainsi acquise progressivement, il faut en principe posséder une référence de vitesse de défilement relatif du doigt par rapport au capteur, ou imposer une vitesse fixe de défilement. Cela nécessite donc des moyens spécifiques supplémentaires.

Dans le brevet français publié sous le numéro FR 2 749 955 on a décrit un principe de détection par un capteur allongé comportant quelques lignes pour acquérir successivement des images partielles de l'empreinte, ces images se recouvrant mutuellement, de sorte qu'on peut, en recherchant une corrélation entre deux images successives, superposer des images successives décalées au fur et à mesure du défilement du doigt et reconstruire progressivement l'image globale de l'empreinte sans avoir besoin de connaître par des moyens supplémentaires la vitesse de défilement du doigt par rapport au capteur.

Ce type de reconstruction fonctionne bien mais nécessite des aménagements pour augmenter la gamme de vitesses de défilement pour laquelle le fonctionnement reste possible. Il nécessite aussi des aménagements pour minimiser le nombre de calculs à faire pour reconstituer l'image, tout en conservant une bonne précision.

Le document EP-A-1 179 801 décrit un procédé d'acquisition d'image d'empreinte digitale par défilement d'un doigt devant un capteur d'images allongé, avec les opérations de: acquérir une succession d'images partielles en recouvrement mutuel, sous le contrôle d'un processeur, rechercher quel est le déplacement d'une première image, par rapport à une seconde image, qui procure la meilleure corrélation entre les deux images, et déterminer la composante de ce déplacement dans la direction perpendiculaire au capteur allongé; comparer la composante de déplacement à au moins un seuil; en fonction du résultat de la comparaison, déclencher ou non le balayage du capteur.

EP-A-0 735 502, par contre, qui corrige l'intervalle entre les acquisitions d'image, ne mentionne pas comment la vélocité est détectée, et augmente ou décrémente l'intervalle en proportion à la vélocité du doigt.

L'invention a pour but d'améliorer les possibilités de reconstruction de l'image sans augmenter exagérément les calculs nécessaires à cette reconstruction.

Selon l'invention, on propose un procédé d'acquisition d'image d'empreinte digitale par défilement d'un doigt devant un capteur d'image allongé, comprenant les opérations suivantes :

- acquérir une succession d'images partielles en recouvrement mutuel, sous le contrôle d'un processeur,
- rechercher quel est le déplacement d'une première image, par rapport à une seconde image, qui procure la meilleure corrélation entre les deux images, et déterminer en nombre de pixels d'image la composante de ce déplacement dans la direction perpendiculaire au capteur allongé,
- comparer cette composante de déplacement à au moins un seuil,
- en fonction du résultat de la comparaison, conserver, ou augmenter ou décrémenter d'un incrément de temps dT, un retard T imposé par le processeur avant l'acquisition d'une image suivante.

La cadence d'acquisition des images partielles varie donc en fonction de la vitesse de déplacement du doigt sur le capteur dans le sens de défilement attendu.

On reconstruit ensuite l'image en fonction des déplacements dans le sens du défilement et perpendiculairement au défilement, les déplacements considérés entre deux images successives en recouvrement étant ceux qui donnent la meilleure corrélation entre images. La valeur de corrélation est une grandeur mathématique qui représente la ressemblance plus ou moins forte entre les deux images, et on peut choisir comme grandeur de corrélation une fonction qui présente un maximum ou (de préférence) un minimum lorsque les deux images (première image décalée et deuxième image) sont identiques. A chaque nouvelle image, le retard d'acquisition est réajusté dans un sens tendant à ce que le déplacement qui donne la meilleure corrélation reste à peu près constant autour du seuil considéré.

Il y a de préférence un seuil haut et un seuil bas, le dépassement vers le haut du seuil haut engendrant une décrémentation de dT du retard T et le dépassement vers le bas du seuil bas engendrant une incrémentation de dT du retard T. Les seuils sont de préférence de quelques pixels. La différence entre le seuil haut et le seuil bas est de préférence d'un seul pixel. Les seuils sont de préférence respectivement de 2 et 3 pixels. Cela veut dire que le retard ménagé entre deux acquisitions successives est ajusté en permanence de telle sorte que le déplacement d'image entre deux acquisitions successives tourne autour de 2 à 3 pixels.

Pour un compromis acceptable en termes de temps de calcul, la corrélation est effectuée sur une portion restreinte de l'image fournie par le capteur. Par exemple, on fait la corrélation sur une portion d'image constituée par un ou plusieurs segments d'une ligne de l'image partielle : on recherche dans une ligne de la deuxième image des segments ayant la même constitution que dans la première image mais situés à une position différente dans l'image du fait du déplacement relatif qui a eu lieu entre l'acquisition de la première image et l'acquisition de la deuxième image. Le capteur comporte de préférence, pour cette recherche de corrélation sur un segment de ligne, une petite zone rectangulaire dans laquelle peut se retrouver l'image du segment après un déplacement de quelques pixels globalement dans le sens du défilement.

Dans une réalisation particulière, on peut envisager que la corrélation se fasse uniquement dans une zone centrale du capteur, et que le capteur allongé ait une zone de détection d'image qui ne comporte pratiquement qu'une petite surface rectangulaire au centre (de plusieurs lignes pour pouvoir détecter les déplacements en vue de la corrélation et de la reconstruction) et une seule ligne en dehors de la région centrale (ou à la rigueur quelques lignes mais un nombre de lignes plus petit que dans la région centrale). Cette forme de la zone de détection proprement dite laisse plus de place, sur la puce de silicium rectangulaire, pour placer des circuits de traitement de signal utiles à la corrélation et à la reconstruction d'image, voire même à la reconnaissance d'empreinte.

Pour simplifier les opérations de calcul de la corrélation optimale, on ne recherchera de corrélation qu'avec des images décalées dans un sens qui correspond au sens de défilement attendu pour le doigt par rapport au capteur mais pas au sens inverse. Par exemple, on limite le champ de la recherche de corrélation en effectuant des déplacements successifs de la seconde image dans plusieurs directions et avec plusieurs amplitudes possibles, mais seulement selon des directions dont l'angle avec la direction de défilement théorique attendue est inférieur à 45°, ou même une valeur moindre.

Lors du calcul de corrélation en vue de la reconstruction, on peut effectuer des calculs de corrélation qui donnent une valeur de corrélation optimale pour un déplacement qui est un nombre entier de pas des pixels ; toutefois, lorsque les déplacements sont lents, une corrélation à un pas de pixel près peut ne pas être suffisamment précise. Dans ce cas, on observe les meilleures corrélations obtenues au voisinage de la position (au pixel près) et on effectue une interpolation à partir de deux (ou plusieurs) corrélations voisines de la meilleure corrélation trouvée, pour calculer une valeur de déplacement intermédiaire qui devrait correspondre à une corrélation théorique encore meilleure ; cette valeur de déplacement est alors une valeur non entière de pas de pixels, et on utilise cette valeur non entière pour la reconstruction. Ceci est fait de préférence aussi bien dans la direction de défilement que dans la direction perpendiculaire.

D'autres caractéristiques et avantages de l'invention apparaîtront à la lecture de la description détaillée qui suit et qui est faite en référence aux dessins annexés dans lesquels :

- la figure 1 représente le système général d'acquisition d'empreinte ;
- la figure 2 représente une forme préférée de surface active du capteur d'image ;
- la figure 3 représente un organigramme explicatif des étapes générales d'acquisition d'image ;
- la figure 4 représente un organigramme explicatif de l'acquisition à cadence variable ;
- la figure 5 représente un schéma de calcul d'interpolation pour déterminer la corrélation optimale à mieux qu'un pixel près.

Le système d'acquisition d'empreinte digitale comprend un capteur d'image comprenant une barrette allongée (une ou plusieurs lignes de pixels) devant laquelle va se déplacer le doigt. Cette barrette est plus petite que l'image du doigt de sorte que seul un défilement relatif du doigt par rapport au capteur permet de reconstituer une image globale d'empreinte.

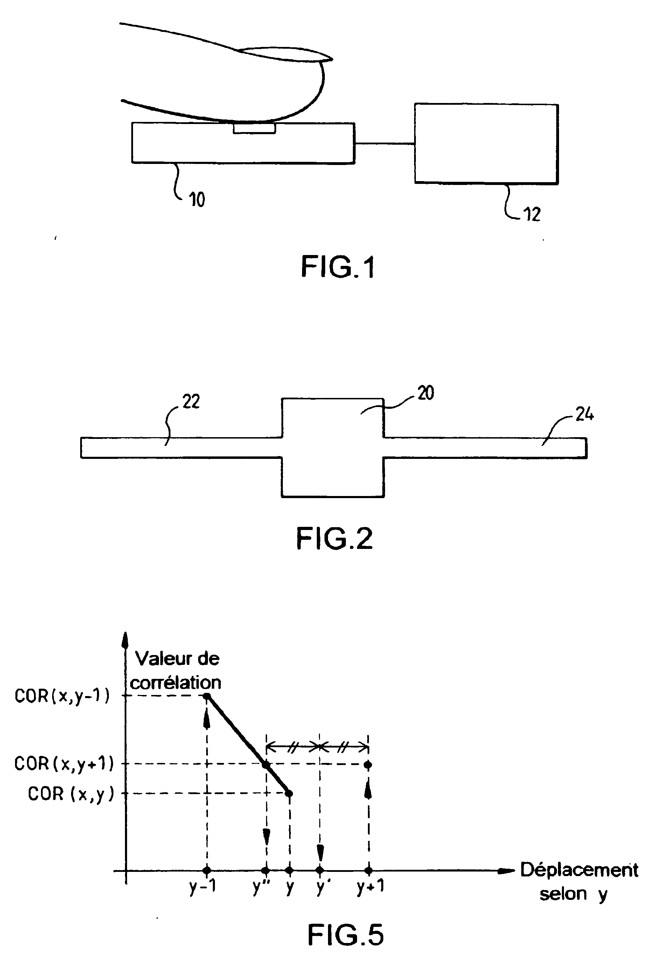

La figure 1 représente le principe de l'acquisition, utilisant ce capteur 10 et des circuits électroniques de traitement 12 servant à la reconstruction de l'image globale à partir des images partielles successivement détectées par le capteur.

Le capteur n'est pas nécessairement une barrette ou matrice au sens classique ayant des lignes qui auraient toutes le même nombre de pixels ; il s'agit essentiellement d'une ou plusieurs lignes principales de N pixels qui serviront véritablement à la détection de l'ensemble de l'image du doigt et d'un réseau de quelques lignes et quelques colonnes formant une matrice centrale servant plus spécifiquement à la corrélation d'images partielles successives.

La forme de la surface active du capteur 10 est représentée à la figure 2 : une petite région centrale rectangulaire 20 et deux ailes 22 et 24 allongées perpendiculairement au sens de défilement représenté par la flèche 30 ; les ailes s'étendent respectivement de part et d'autre de la région centrale ; elles sont alignées et plus étroites que la région centrale. Les ailes alignées et la partie de région centrale qui les prolonge en les réunissant constituent une barrette de détection d'image dont la longueur correspond à la largeur d'image qu'on veut détecter ; par exemple, la longueur de la ligne correspond à la largeur d'un doigt (à titre d'exemple 1 à 2 cm environ) ; la barrette de détection d'image est de préférence constituée d'une seule ligne de pixels, mais si on veut optimiser la reconstruction, on peut prévoir que la barrette comporte plusieurs lignes de pixels. C'est la barrette de détection qui fournit les images partielles servant à la reconstruction de l'image globale.

La région centrale est celle qui servira à faire les calculs de corrélation, et c'est donc celle qui va enregistrer des images en recouvrement partiel (il n'est pas nécessaire que la barrette de détection elle-même fournisse des images en recouvrement partiel dès lors que la région centrale en fournit). Le nombre de pixels de la région centrale est choisi suffisamment faible pour que les temps de calcul de corrélation soient acceptables sans pour autant réduire trop la précision des calculs de corrélation. Le nombre de lignes de la région centrale 20 est en principe supérieur à celui des ailes 22 et 24.

Le capteur d'image fonctionne sous le contrôle d'un processeur qui va déterminer le cadencement des différentes prises d'image partielle du doigt pendant son défilement et qui va déterminer la manière dont il faut reconstituer les images partielles pour aboutir à une image globale d'empreinte digitale. Le processeur peut être constitué de deux parties (deux processeurs), l'une réalisant la mise en mémoire des images partielles en vue de calculs ultérieurs, l'autre effectuant les calculs de corrélation, mais en principe un seul processeur suffit pour exécuter les deux tâches.

Le processeur est de préférence situé sur la même puce que le capteur d'image mais ce n'est pas obligatoire. Sur la figure 1 on a supposé que le processeur fait partie de circuits électroniques 12 extérieurs à la puce constituant le capteur d'image.

L'acquisition des images partielles doit être suffisamment rapide pour avoir un recouvrement suffisant entre les images partielles, faute de quoi une reconstruction ne serait pas vraiment possible. La vitesse de défilement d'un doigt peut varier par exemple entre 1 cm/s et 20 cm/s, et est typiquement de l'ordre de 7 cm/s.

La taille d'un pixel de l'image est typiquement de l'ordre de 50 micromètres, et pour cette gamme de vitesses, cela correspond à 200 à 4000 pixels par seconde en vitesse apparente sur le capteur, soit 0,2 à 4 pixels par milliseconde.

En supposant que le capteur d'image comporte seulement huit lignes dans la région qui est utilisée pour la corrélation donc dans la région où il devra nécessairement y avoir un certain recouvrement d'images successives, on voit qu'il faut environ 700 à 1000 acquisitions successives d'images partielles par seconde pour avoir un recouvrement d'images même lorsque le doigt se déplace à une vitesse maximale de 20 cm/s. Le recouvrement sera alors sur deux ou trois lignes, c'est-à-dire que les deux ou trois premières lignes de la deuxième image seront en principe identiques aux deux ou trois dernières lignes de la première image. La deuxième image aura donc, par rapport à la première, 2 ou 3 lignes communes et 6 ou 5 lignes nouvelles.

Ceci donne l'ordre de grandeur de la cadence d'acquisition d'images successives qui doit être prévu. On peut bien sûr améliorer le recouvrement partiel en augmentant le nombre de lignes du capteur dans la région centrale 20. Ce nombre peut être par exemple de 20 ou 30 lignes plutôt que 8 lignes, mais ceci se fait bien sûr au détriment du coût en surface de silicium.

A titre indicatif, l'image globale d'un doigt peut correspondre à environ 300 x 400 pixels après reconstruction.

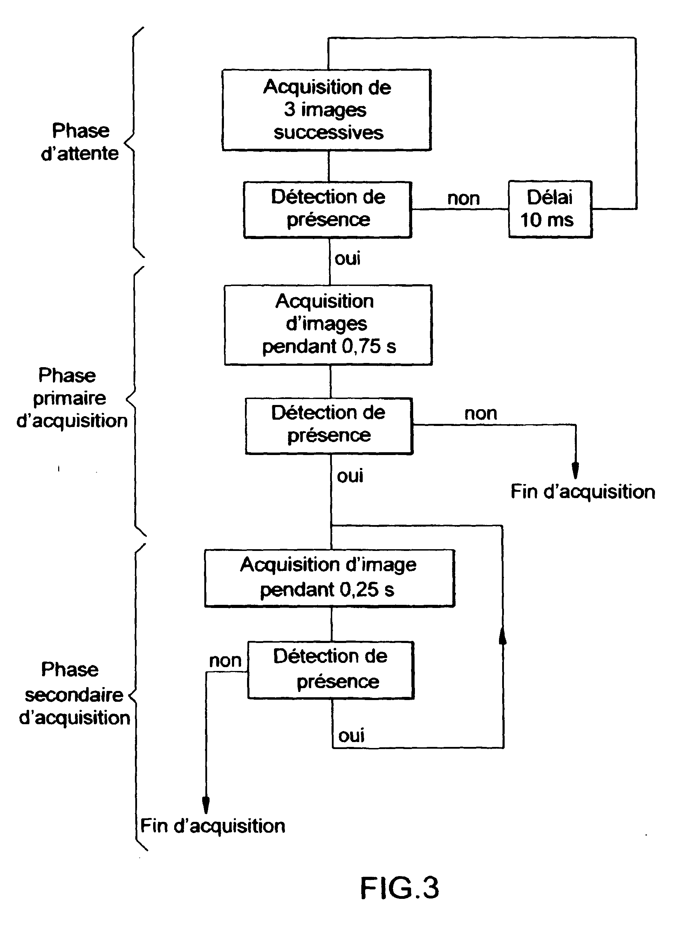

La séquence d'acquisition de l'image, rappelée sur la figure 3, peut être la suivante :

- phase d'attente : acquisition de quelques images (par exemple 3), et détection par calcul de la présence d'un doigt. Si une présence est détectée, passage à la phase suivante, sinon, attente d'une dizaine de millisecondes avant une nouvelle acquisition de quelques images et une nouvelle détection de présence; le délai de dix millisecondes assure que même dans le cas d'une vitesse maximale de 20 cm/s on ne perdra pas plus de quelques millimètres d'image si un doigt a commencé à défiler entre deux tentatives de détection ;

- phase primaire d'acquisition : on acquiert arbitrairement des images partielles pendant par exemple trois quarts de seconde ; la plupart du temps cette durée sera suffisante pour une acquisition complète de l'image du doigt puisque cette durée correspond à un défilement à vitesse assez faible (2,6 cm/s pour une image de 2 cm de long) ; on calcule au bout de ce temps la présence d'un doigt dans les dernières images partielles ; si le doigt est toujours présent, on passe à la phase suivante ; sinon l'acquisition d'images est terminée et on peut passer à la phase suivante ;

- phase secondaire d'acquisition, pour le cas où le défilement du doigt aurait été particulièrement lent : si le doigt est présent, on continue l'acquisition d'images partielles mais seulement pendant un quart de seconde, et on teste la présence du doigt sur les dernières tranches ; si le doigt est présent on recommence l'acquisition pendant une nouvelle période d'un quart de seconde, sinon l'acquisition est terminée et on passe à la reconstruction.

Les images partielles ainsi acquises peuvent être stockées en vue de leur traitement ultérieur, ou bien la reconstruction peut commencer progressivement pendant les périodes d'acquisition. Dans le premier cas il faut une mémoire importante avec des moyens de calcul plus réduits ; dans le second cas il faut des moyens de calcul importants avec une mémoire plus réduite.

La détection du doigt peut se faire par contrôle de l'écart-type entre les niveaux de signal des pixels de la partie centrale de l'image. Lorsque le doigt n'est pas présent, l'écart-type est faible, il ne correspond qu'au bruit. Lorsque le doigt est présent il augmente beaucoup et il suffit de choisir un seuil de détection assez haut, permettant de ne pas déclencher l'acquisition sur du simple bruit.

L'arrêt d'acquisition se fait sur le même principe, sur une durée suffisante (20 ms par exemple) pour qu'on soit sûr que le doigt a complètement quitté le capteur (et avec un seuil plus bas que le précédent pour éviter une instabilité).

Pour effectuer la reconstruction d'image globale à partir d'images partielles, il faut calculer le déplacement du doigt d'une image à la suivante.

Pour cela, on adopte de préférence un procédé de corrélation ne nécessitant qu'une faible puissance de calcul pour que la corrélation de deux images successives prenne un temps faible (ordre de grandeur : 1 milliseconde pour trouver la meilleure corrélation entre deux images).

Un calcul de corrélation simple et efficace consiste à calculer la différence entre deux valeurs de pixels $Pi$ et $Pj$ correspondant à deux positions possibles du même point d'image réelle dans deux images partielles successives, et à additionner les valeurs absolues des écarts (ou alternativement les carrés des écarts) pour tous les pixels $Pi$ de la zone de corrélation. Autrement dit, si $Pi$ est la valeur de signal d'une position de pixel déterminée $i$ de la première image, $Pj$ est la valeur d'une autre position de pixel $j$, mesurée dans la deuxième image, et les pixels $i$ et $j$ sont séparés d'une distance $x$ en abscisse et $y$ en ordonnée. L'abscisse est comptée dans le sens de la longueur de la barrette allongée, l'ordonnée est comptée dans le sens perpendiculaire (c'est-à-dire essentiellement dans le sens de défilement du doigt).

La valeur de corrélation à tester est calculée à partir de cette somme d'écarts en valeur absolue pour tous les pixels de la zone de corrélation ; la zone de corrélation est un rectangle de la première image plus petit que la région centrale 20 dans laquelle se fait la corrélation. La valeur de corrélation $COR(x,y)$ pour un déplacement $(x,y)$ est liée à un déplacement possible d'image $x,y$ et bien entendu, tous les pixels $i$ ($i$ variant de 1 à $n$ s'il y a $n$ pixels dans la zone de corrélation) qui vont faire l'objet de ce calcul de valeur de corrélation pour un déplacement $x,y$ sont déplacés de la même valeur $x$, $y$. Plus la valeur de corrélation est faible, plus la probabilité est grande que la deuxième image soit effectivement l'image de la même portion de doigt qui a été vue par la première image lors de l'acquisition précédente. On comprendra que la somme des écarts $Pi-Pj$ est d'autant plus faible que les images sont mieux corrélées, par conséquent, la meilleure valeur de corrélation correspond à une valeur minimale de la grandeur de corrélation ; mais d'autres grandeurs de corrélation pourraient être choisies, qui correspondraient à la recherche d'un maximum pour la meilleure corrélation possible. La solution préconisée ici (corrélation optimisée par recherche d'un minimum d'une somme d'écarts) permet de simplifier les calculs.

Plusieurs valeurs de corrélation sont calculées, pour différentes valeurs de $x$, $y$ et on recherche quel est le déplacement $x$, $y$ qui donne la valeur la plus faible.

En principe $x$ et $y$ sont exprimés en nombres entiers de pixels, mais on verra qu'on peut affiner la recherche de corrélation maximale pour des fractions de pixels.

De préférence, le nombre de pixels sur lequel on effectue la corrélation est limité. Par exemple, la corrélation s'effectue sur un segment de ligne pris dans la région centrale 20 de la zone active. Ce segment a de préférence une longueur inférieure à la largeur de cette zone centrale, pour tenir compte du fait que le déplacement d'image peut être légèrement oblique. Le segment est de préférence situé dans la partie avant de cette région centrale du capteur, c'est-à-dire la partie qui voit en premier une nouvelle portion d'image de doigt. En effet, compte-tenu du sens de défilement du doigt, une portion d'image de doigt qui apparaît d'abord dans la partie avant d'une première image va progressivement se décaler vers la partie arrière au fur et à mesure du défilement du doigt dans le sens prévu et on pourra rechercher la corrélation entre une portion de ligne d'image située dans la partie avant de la première image et une portion de ligne d'image située plus en arrière. Ceci suppose que le sens de défilement du doigt est imposé ; dans le cas contraire, la portion de ligne pour laquelle on recherche une corrélation dans les images suivantes devrait être dans la partie centrale de la région 20.

On notera que si la forme de la zone active du capteur était simplement rectangulaire, contrairement au cas représenté sur la figure 2 où la zone est en forme de croix, la corrélation pourrait s'effectuer différemment, par exemple sur plusieurs segments de ligne pris dans la zone active : on rechercherait des déplacements relatifs de chaque segment.

Il est préférable que le calcul de corrélation s'effectue sur un nombre fixe de pixels, par exemple 64, nombre binaire simple qui simplifie les divisions pour le calcul de la corrélation.

Un calcul de corrélation sera fait par exemple pour les valeurs de déplacement d'image suivants, exprimés, tant horizontalement que verticalement, en nombre de pixels :

(0, 1) ; (0, 2) ; (0, 3) ;(0, 4) (déplacements dans le sens de défilement)
(1, 1) ; (1, 2) ; (1, 3) ; (1, 4) (déplacement légèrement oblique à droite)
(-1, 1) ; (-1, 2) ; (-1, 3) ; (-1, 4) (déplacement légèrement oblique à gauche)

et éventuellement d'autres valeurs de déplacement plus obliques si on veut élargir les possibilités de détection de déplacement et de reconstruction à des directions franchement écartées de la direction de défilement nominale.

Selon l'invention, il n'est en général pas nécessaire de rechercher des corrélations pour des déplacements d'amplitude supérieures à celles indiquées ci-dessus (4 pixels en vertical dans le sens de défilement). Au total, une recherche de corrélation optimale parmi 16 valeurs de déplacement possibles devrait être suffisante avec le principe de l'invention.

En effet, on choisit d'adapter la cadence de prise d'images partielles en fonction du résultat de la corrélation de manière que les corrélations ultérieures soient optimales pour des faibles déplacements. Cela revient à adapter la cadence d'acquisition d'image à la vitesse de déplacement du doigt dans un sens tendant à faciliter les calculs de corrélation et la reconstruction.

L'hypothèse de base est que le doigt se déplace en ne subissant que de faibles accélérations ou pas d'accélérations du tout, et on peut donc présumer que si la vitesse a une valeur donnée au moment d'une acquisition d'image, elle aura pratiquement la même valeur lors de l'acquisition suivante.

D'une part, cela veut dire qu'on peut pratiquement prédire (après quelques essais permettant une détermination approchée de la vitesse) la position de l'image suivante, à un ou deux pixels près. Mais surtout, on peut adapter l'intervalle de temps entre deux acquisitions pour que le déplacement entre deux acquisitions reste en moyenne égal à 2 ou 3 pixels (notamment dans le cas d'un capteur ayant huit lignes dans la zone de corrélation).

Cette valeur de 2 ou 3 pixels pourrait être augmentée si le capteur avait plus de huit lignes dans la zone de corrélation, mais on a intérêt, pour minimiser les calculs à ne pas augmenter trop la taille de la zone de corrélation.

La cadence d'acquisition doit donc pouvoir être suffisante pour ne pas dépasser un déplacement de 2 à 3 pixels (valeur préférée) pour une vitesse maximale du doigt ; inversement, on ne conserve pas cette cadence dans le cas d'une vitesse lente du doigt, car si on la conservait on aboutirait à de trop faibles déplacements d'image entre deux acquisitions et la recherche de corrélation entre deux images successives n'aurait que peu de signification, surtout si la corrélation ne permet de déterminer un déplacement qu'à un pixel près.

On ralentit donc la cadence en cas de déplacement lent, pour n'acquérir une nouvelle image que lorsque le doigt s'est déplacé de 2 ou 3 pixels. Il est intéressant de constater qu'on peut mettre à profit ce temps pour intégrer plus longtemps le signal détecté par le capteur, lorsque le type de capteur nécessite un temps d'intégration assez long pour fournir un signal utilisable : c'est le cas des capteurs fonctionnant sur un effet thermique (variation de température ou de conduction thermique entre les crêtes et les vallées des empreintes digitales).

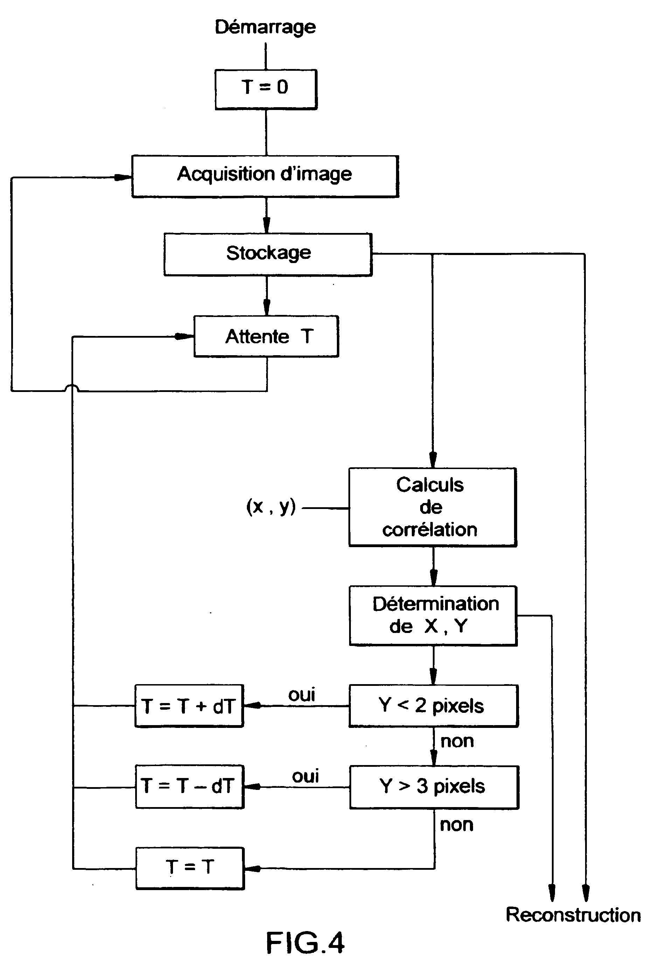

L'algorithme d'adaptation de cadence d'acquisition, schématisé sur la figure 4, est le suivant : si on considère que la lecture d'une image dure un temps t1 et que l'intervalle de temps ou "temps d'attente" avant la lecture de l'image suivante est T, on procède comme suit :

- a) initialement, un temps d'attente T entre deux acquisitions est mis à zéro, ce qui veut dire que la cadence d'acquisition est maximale ; cela permet a priori d'être prêt pour le cas où le déplacement du doigt se ferait à vitesse particulièrement élevée ;

- b) une première acquisition d'image est faite, puis une deuxième avec ce temps d'attente nul entre les deux ;

- c) la recherche de corrélation maximale est effectuée en calculant la valeur de corrélation entre la deuxième image et la première image déplacée de x,y, et ceci pour différents déplacements x,y de la première image ; on détermine quelle est la valeur X,Y qui donne la meilleure valeur de corrélation ; cette valeur représente le vecteur de déplacement de l'image du doigt entre les deux acquisitions ;

- d) si le déplacement (essentiellement dans la direction y de défilement attendue du doigt) est inférieur à un seuil bas, de préférence 2 pixels, on incrémente le temps d'attente T d'une certaine valeur dT (typiquement 50 microsecondes) ; si au contraire il est supérieur à un seuil haut, de préférence 3 pixels, on le décrémente de la même quantité, sous réserve qu'il ne soit pas déjà nul ; si le déplacement est égal à 2 ou 3 pixels, on ne modifie pas le temps d'attente.

Après convergence vers un temps d'attente T adapté à la vitesse du doigt, l'évolution est lente car le doigt ne subit pas d'accélération significative, et le temps d'attente oscille entre T-dT et T+dT.

Dans la recherche de cette convergence vers un temps d'attente approprié, le temps d'attente est limité à une certaine valeur Tmax au-delà de laquelle on ne l'incrémente plus (typiquement une dizaine de millisecondes) ; cette valeur maximale dépend de la vitesse minimale qu'on exige pour le déplacement du doigt, typiquement 1 cm/s. En valeur inférieure, T est évidemment limité à 0.

Le choix des seuils inférieur et supérieur de déplacement, peut être différent de 2 et 3 pixels. Les seuils pourraient être égaux, mais en les rendant différents on évite des oscillations inutiles du temps d'attente. Ils pourraient être diminués jusqu'à 1 et 2 pixels mais alors la reconstruction d'image est moins précise ; ils pourraient être augmentés, mais alors il faut s'assurer que le capteur a suffisamment de lignes dans la zone de corrélation pour prendre en compte des déplacements plus importants, et de plus la recherche de corrélation prend plus de temps car il faut en principe calculer un plus grand nombre de valeurs de corrélation sur une plus grande gamme de déplacements possibles x, y.

La figure 4 rappelle l'organigramme de cette partie du traitement. Bien entendu, après chaque acquisition d'image donnant lieu au calcul d'un nouveau retard T, la deuxième image acquise devient la première image pour la séquence d'acquisition et recherche de corrélation suivante.

Après l'acquisition des différentes images partielles de doigt progressivement décalées en fonction de la vitesse de déplacement du doigt, on reconstruit l'image globale du doigt. Selon que la puissance de calcul et la mémoire disponible pour stocker les images partielles sont plus ou moins importantes, on effectue la reconstruction au fur et à mesure de l'acquisition ou après la fin de toutes les acquisitions.

Dans les deux cas, à partir du moment où la cadence d'acquisition a été stabilisée de telle manière que le déplacement d'image entre deux acquisitions soit constant (2 ou 3 pixels en moyenne), il n'est pratiquement pas nécessaire de tenir compte de la valeur de cette cadence. Il suffit, pour reconstruire l'image globale du doigt, de juxtaposer les images successives décalées à chaque fois de la valeur de déplacement qui a donné la meilleure corrélation possible et qui est en moyenne de 2 ou 3 pixels dans le sens du défilement (vertical) et proche de zéro dans le sens perpendiculaire (horizontal) si le doigt se déplace bien dans le sens de défilement.

Toutefois, pour affiner la reconstruction d'image, il est préférable de rechercher la corrélation maximale à mieux qu'un pixel près, tant verticalement qu'horizontalement. En effet, sur un petit déplacement tel que 2 ou 3 pixels, on va trouver des valeurs de corrélation qui ont peu de chances de correspondre à un déplacement d'image égal à un nombre entier de pixels.

Ainsi, si plusieurs valeurs de corrélation sont trouvées pour différents déplacements exprimés en nombre entiers de pixels, et si deux valeurs de corrélation COR(x, y-1) et COR(x, y+1) encadrent la valeur de corrélation la plus élevée COR(x,y), on peut déduire des trois valeurs un déplacement x, y' exprimé en fraction de pixels dans le sens de défilement qui correspond mieux au pic de corrélation que le déplacement x,y qui donne apparemment la meilleure corrélation au pixel près.

La figure 5 illustre une manière de calculer cette approximation du déplacement qui donne la meilleure corrélation à mieux qu'un pixel près à partir de calculs faits au pixel près. L'algorithme est le suivant, expliqué à partir d'un graphique bien que dans la pratique, l'algorithme soit bien sûr exécuté par un logiciel à partir d'équations représentant les tracés sur le graphique : on porte sur le graphique (déplacement y en abscisse, valeurs de corrélations en ordonnées) les trois valeurs COR(x,y), COR(x, y-1) et COR(x, y+1), parmi lesquelles il y a un point de meilleure corrélation ayant une valeur de corrélation minimale COR(x,y), un point ayant une valeur de corrélation maximale (l'un des deux autres points), et un point ayant une valeur de corrélation intermédiaire (l'autre des deux points) ; on trace le segment qui relie le point de corrélation maximale et le point de corrélation minimale ; On détermine l'abscisse y" du point de ce segment qui a pour ordonnée la valeur de corrélation intermédiaire ; et on calcule la valeur d'abscisse y' qui est le point milieu entre l'abscisse y' et l'abscisse du point de corrélation intermédiaire (y+1 ou y-1).

Ainsi, par exemple, si le point ayant la valeur de corrélation intermédiaire est le point d'abscisse x, y+1 et d'ordonnée COR(x, y+1), le point de corrélation optimale approché à mieux qu'un pixel près sera le point d'abscisse

$$y' = (y'' + y + 1)/2.$$

Dans le cas contraire, si le point de corrélation intermédiaire est COR(x, y-1), le point de corrélation maximale à mieux qu'un pixel près sera le point d'abscisse y' = (y" + y -1)/2.

C'est cette valeur y' qui constituera la valeur Y du déplacement entre la deuxième image et la première image dans le sens du défilement.

La même interpolation peut être faite pour déterminer le déplacement X à mieux qu'un pixel près dans le sens perpendiculaire au défilement, à partir des deux valeurs de corrélation COR(x-1, y), et COR(x+1,y) qui encadrent la valeur de meilleure corrélation COR(x,y).

Lors de la reconstruction d'image, on associe chaque image au déplacement X, Y calculé par rapport à l'image précédente, et on juxtapose les images ainsi progressivement décalées pour reconstituer l'image globale. Cette juxtaposition peut se faire dans une matrice de résolution supérieure à un pixel du capteur si on recherche les déplacements X, Y à mieux qu'un pixel près. Cependant, il est possible et même préférable de faire la juxtaposition dans une matrice de résolution 1 pixel, mais cela suppose une adaptation du procédé de reconstruction ; cette adaptation est la suivante : on définit, pour la superposition d'une image partielle dans l'image globale, une valeur de déplacement qui est prise non pas par rapport à l'image précédente (car alors il ne servirait à rien d'avoir calculé le déplacement à mieux qu'un pixel près pour le reporter dans une image définie à un pixel près) mais par rapport à la toute première image acquise : le déplacement d'une image par rapport à la toute première image est l'intégrale de tous les déplacements successifs calculés chacun à mieux qu'un pixel près, et c'est cette intégrale qui est reportée à un pixel près dans la matrice de reconstruction d'image globale. On décale donc une image partielle d'une valeur de déplacement comptée par rapport à une première image acquise, en cumulant les déplacements successifs des images partielles acquises entre la première image et l'image partielle considérée.

## Revendications

1. Procédé d'acquisition d'image d'empreinte digitale par défilement d'un doigt devant un capteur d'images allongé, comprenant les opérations suivantes :

- acquérir une succession d'images partielles en recouvrement mutuel, sous le contrôle d'un processeur,
- rechercher quel est le déplacement d'une première image, par rapport à une seconde image, qui procure la meilleure corrélation entre les deux images, et déterminer, en nombre de pixels d'image, la composante de ce déplacement dans la direction perpendiculaire au capteur allongé,

- comparer la composante de déplacement à au moins un seuil,

**caractérisé par**:

- en fonction du résultat de la comparaison, conserver, ou augmenter ou décrémenter d'un incrément de temps dT, un retard T imposé par le processeur avant l'acquisition d'une image suivante.

**2.** Procédé selon la revendication 1, **caractérisé en ce que** la meilleure corrélation est recherchée à partir de déplacements à la fois dans le sens de la longueur et dans le sens de la largeur du capteur d'image, et une image globale du doigt est reconstruite par superposition des images décalées qui donnent la meilleure corrélation entre images successives.

**3.** Procédé selon l'une des revendications 1 et 2, **caractérisé en ce qu'**à chaque nouvelle image, le retard d'acquisition est réajusté dans un sens tendant à ce que le déplacement qui donne la meilleure corrélation reste à peu près constant autour du seuil considéré d'une acquisition à la suivante.

**4.** Procédé selon la revendication 3, **caractérisé en ce qu'**il est prévu à la fois un seuil haut et un seuil bas, le dépassement vers le haut du seuil haut engendrant une décrémentation de dT du retard T et le dépassement vers le bas du seuil bas engendrant une incrémentation de dT du retard T.

**5.** Procédé selon la revendication 4, **caractérisé en ce que** la différence entre le seuil haut et le seuil bas est d'un seul pixel.

**6.** Procédé selon la revendication 5, **caractérisé en ce que** les seuils sont respectivement de 2 et 3 pixels.

**7.** Procédé selon l'une des revendications 1 à 6, **caractérisé en ce que** la corrélation est effectuée sur une portion restreinte de l'image fournie par le capteur.

**8.** Procédé selon la revendication 7, **caractérisé en ce que** la corrélation se fait uniquement dans une zone centrale du capteur, le capteur ayant un nombre de lignes faible sur toute sa largeur et des lignes supplémentaires de plus faible longueur dans sa partie centrale pour constituer une zone de corrélation centrale.

**9.** Procédé selon l'une des revendications précédentes, **caractérisé en qu'**on effectue des calculs de corrélation pour des déplacements qui sont des nombres entiers de pas des pixels, et on effectue un calcul d'interpolation à partir de deux (ou plusieurs) corrélations voisines de la meilleure corrélation calculée pour trouver une valeur de déplacement intermédiaire à mieux qu'un pixel près qui devrait correspondre à une corrélation théorique encore meilleure, et on utilise cette valeur de déplacement intermédiaire lors de la reconstruction d'une image globale par juxtaposition d'images partielles décalées.

**10.** Procédé selon la revendication 9, **caractérisé en ce que** pour la reconstruction d'une image globale, on décale une image partielle d'une valeur de déplacement comptée par rapport à une première image acquise, en cumulant les déplacements successifs des images partielles acquises entre la première image et l'image partielle considérée.

**Claims**

**1.** Method of acquiring a fingerprint image by moving a finger in front of an elongate sensor of images, comprising the following operations:

- acquiring a succession of mutually overlapping partial images, under the control of a processor,
- searching for that displacement of a first image, with respect to a second image, which affords the best correlation between the two images, and determining, as a number of image pixels, the component of this displacement in the direction perpendicular to the elongate sensor,
- comparing the component of displacement with at least one threshold,

**characterized by**:

- as a function of the result of the comparison, maintaining, or increasing or decrementing by a time increment dT, a delay T imposed by the processor before the acquisition of a next image.

**2.** Method according to Claim 1, **characterized in that** the best correlation is sought on the basis of displacements both in the length direction and in the width direction of the image sensor, and a global image of the finger is reconstructed by superimposing the shifted images which give the best correlation between successive images.

**3.** Method according to either of Claims 1 and 2, **characterized in that** at each new image, the acquisition delay is readjusted in a direction tending to make the displacement which gives the best correlation remain almost constant around the threshold considered from one acquisition to the next.

**4.** Method according to Claim 3, **characterized in that** there is provision both for a high threshold and for a low threshold, the overshooting of the high threshold bringing about a decrementation by dT of the delay T and the undershooting of the low threshold bringing about an incrementation by dT of the delay T.

**5.** Method according to Claim 4, **characterized in that** the difference between the high threshold and the low threshold is one pixel.

**6.** Method according to Claim 5, **characterized in that** the thresholds are respectively 2 and 3 pixels.

**7.** Method according to one of Claims 1 to 6, **characterized in that** the correlation is performed on a restricted portion of the image provided by the sensor.

**8.** Method according to Claim 7, **characterized in that** the correlation is effected only in a central zone of the sensor, the sensor having a small number of rows over the whole of its width and additional rows of smaller length in its central part so as to constitute a central correlation zone.

**9.** Method according to one of the preceding claims, **characterized in that** correlation calculations are performed for displacements which are integer numbers of spacings of the pixels, and an interpolation calculation is performed on the basis of two (or more) correlations neighboring the best correlation calculated so as to find a value of intermediate displacement to within better than a pixel which ought to correspond to a still better theoretical correlation, and this intermediate displacement value is used during the reconstruction of a global image by juxtaposition of shifted partial images.

**10.** Method according to Claim 9, **characterized in that** for the reconstruction of a global image, a partial image is shifted by a displacement value counted with respect to a first image acquired, by aggregating the successive displacements of the partial images acquired between the first image and the partial image considered.

**Patentansprüche**

**1.** Verfahren zur Akquisition eines digitalen Fingerabdrucks durch Ablaufen eines Fingers vor einem länglichen Bildsensor, das die folgenden Vorgänge aufweist:

- Akquisition einer Abfolge von Teilbildern durch gegenseitiges Überlappen unter der Kontrolle eines Prozessors,
- Suchen der Bewegung eines erstens Bilds in Bezug auf ein zweites Bild, das die beste Korrelation zwischen den beiden Bildern ergibt, und Bestimmen der Bewegungskomponente in die Richtung senkrecht zu dem länglichen Sensor in Anzahl Bildpunkten,
- Vergleichen der Bewegungskomponente mit mindestens einem Schwellenwert,

**gekennzeichnet durch**:

- je nach Ergebnis des Vergleichs, Behalten oder Erhöhen oder Verringern einer Verzögerung T, die von dem Prozessor vor der Akquisition eines nächsten Bilds auferlegt wird, um ein Zeitinkrement dT.

**2.** Verfahren nach Anspruch 1, **dadurch gekennzeichnet, dass** die beste Korrelation ausgehend von Bewegungen sowohl in die Längsrichtung als auch in die Breitenrichtung des Bildsensors erforscht wird, und dass das globale Bild des Fingers durch Überlagerung der versetzten Bilder, die die beste Korrelation zwischen aufeinander folgenden Bildern ergeben, rekonstruiert wird.

**3.** Verfahren nach Anspruch 1 und 2, **dadurch gekennzeichnet, dass** die Akquisitionsverzögerung bei jedem neuen Bild in eine Richtung angepasst wird, die dazu tendiert, dass die Bewegung, die die beste Korrelation ergibt, von einer Akquisition zur nächsten ungefähr um den betreffenden Schwellenwert konstant bleibt.

**4.** Verfahren nach Anspruch 3, **dadurch gekennzeichnet, dass** gleichzeitig ein oberer und ein unterer Schwellenwert vorgesehen ist, wobei das Überschreiten des oberen Schwellenwerts nach oben ein Verringern um dT der Verzögerung T bewirkt, und das Überschreiten nach unten des unteren Schwellenwerts ein Erhöhen um dT der Verzögerung T bewirkt.

**5.** Verfahren nach Anspruch 4, **dadurch gekennzeichnet, dass** der Unterschied zwischen dem oberen und dem unteren Schwellenwert ein einziges Pixel ist.

**6.** Verfahren nach Anspruch 5, **dadurch gekennzeichnet, dass** die Schwellenwerte jeweils 2 und 3 Pixel betragen.

**7.** Verfahren nach einem der Ansprüche 1 bis 6, **dadurch gekennzeichnet, dass** die Korrelation auf einem eingeschränkten Abschnitt des Bilds, das von dem Sensor geliefert wird, ausgeführt wird.

**8.** Verfahren nach Anspruch 7, **dadurch gekennzeichnet, dass** die Korrelation nur in der zentralen Zone des Sensors erfolgt, wobei der Sensor eine niedrige Anzahl von Zeilen auf seiner ganzen Breite und zusätzliche Zeilen mit geringerer Länge in seinem zentralen Teil hat, um eine zentrale Korrelationszone zu bilden.

**9.** Verfahren nach einem der vorhergehenden Ansprüche, **dadurch gekennzeichnet, dass** man Korrelationsberechnungen für Bewegungen ausführt, die Ganzzahlen von Abständen der Pixel sind, und dass man eine Interpolationsberechnung ausgehend von zwei (oder mehreren) benachbarten Korrelationen der besten berechneten Korrelation durchführt, um einen Zwischenbewegungswert auf besser als ein Pixel genau zu finden, der einer theoretischen, noch besseren Korrelation entsprechen sollte, und dass man diesen Zwischenbewegungswert bei der Rekonstruktion eines globalen Bilds durch Nebeneinanderlagerung versetzter Teilbilder verwendet.

**10.** Verfahren nach Anspruch 9, **dadurch gekennzeichnet, dass** man für die Rekonstruktion eines globalen Bilds ein Teilbild um einen Bewegungswert versetzt, der in Bezug auf ein erstes erfasstes Bild gezählt wird, indem man die aufeinander folgenden Bewegungen der zwischen dem ersten Bild und dem betreffenden Teilbild erfassten Teilbilder summiert.

FIG.1

FIG.2

FIG.5

Phase
d'attente

Acquisition de
3 images
successives

Détection de
présence — non — Délai
10 ms

oui

Phase
primaire
d'acquisition

Acquisition
d'images
pendant 0,75 s

Détection de
présence — non

oui

Fin d'acquisition

Phase
secondaire
d'acquisition

Acquisition d'image
pendant 0,25 s

non — Détection de
présence

oui

Fin d'acquisition

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2749955
- EP 1179801 A
- EP 0735502 A